Europäisches Patentamt

European Patent Office

Office européen des brevets

(19)

(11) Publication number : **0 438 619 B1**

# EUROPEAN PATENT SPECIFICATION

(12)

(45) Date of publication of patent specification :
29.09.93 Bulletin 93/39

(51) Int. Cl.⁵ : **A23L 1/31**

(21) Application number : **90101389.6**

(22) Date of filing : 24.01.90

(54) **Cooked meat.**

(43) Date of publication of application :
31.07.91 Bulletin 91/31

(45) Publication of the grant of the patent :
29.09.93 Bulletin 93/39

(84) Designated Contracting States :
AT BE CH DE DK ES FR GB GR IT LI LU NL SE

(56) References cited :
FR-A- 2 621 455
GB-A- 1 381 594
US-A- 3 961 090

(56) References cited :
PATENT ABSTRACTS OF JAPAN vol. 4, no. 30
(C-2)(512), 15 March 1980
PATENT ABSTRACTS OF JAPAN vol. 8, no.
145 (C-232)(1582), 6 July 1984

(73) Proprietor : FRISCO-FINDUS AG
Industriestrasse
CH-9400 Rorschach (CH)

(72) Inventor : Berg, Svein Aage
Lingvägen 13
S-26261 Aengelholm (SE)
Inventor : Halden, Jonas Peter
Nedre Langvinkelsgatan 73
S-25234 Helsingborg (SE)

EP 0 438 619 B1

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention relates to a method of removing free, unbound water from cooked meat.

In the manufacture of cooked ham which is sliced and gas packed, one major problem is free water leakage. Meat proteins are denatured during heat treatment and this causes the water-holding capacity of the meat to decrease. Thus, a cooked ham can never bind or immobilise all the water in the product before heating and if this free water is not allowed to escape before packaging, it appears as visible drip in the packages. When the drip exceeds about 0.3% of the weight of the product (depending on the package size and measuring method), the visual quality of the product is severely reduced.

In spite of attempts to increase the water holding capacity of ham which include such factors as the use of high quality raw materials (pH 5.7 to 6.1), good salt distribution, efficient tumbling and optimum thermal treatment, the drip problem is not necessarily reduced. It is possible to add polyphosphates, citrate, proteins or carbohydrates to the injection brine to improve the water holding capacity of the products but such components are either not permitted by food legislation in many countries or they are not desired in high quality, pure meat products.

JP-A-557042 discloses a method wherein roast meat is coated with a paper sheet or tube, and then cooked.

GB-A-1381594 discloses a method wherein meat is cooked between and in intimate contact with layers of heat stable absorbent material.

JP-A-5951732 discloses a method wherein meat is wrapped with paper and then heat-sterilised.

We have devised a method of removing free, unbound water from cooked meat before packaging.

Accordingly, the present invention provides a method of removing free, unbound water from cooked meat characterised in that the meat is treated with a water absorbing material after cooking.

The present invention is especially advantageous when the cooked meat is a cooked ham or a similar cooked, cured and/or marinated product made from pork, beef, mutton, turkey etc.

The water absorbing material should be food acceptable and may be a tissue such as paper sheet or a pad of cellulose fibres such as paper or other natural or synthetic absorbing materials.

Conveniently, the meat is wrapped in the water absorbing material after cooking.

The water removal from the cooked meat may take place before chilling, during chilling, during chilled storage or after slicing. The duration of the treatment generally lasts for from one to several days and preferably from 1 to 4 days conveniently at a storage temperature up to 6°C, preferably 0°C to 4°C.

During the treatment the meat is advantageously pressed either in a mould or casing e.g. the mould or casing used for cooking or by means of the atmosphere in a vacuum bag.

In a preferred embodiment of the invention, before cooking, the fresh meat is conventionally cut and trimmed, injected with brine and tumbled at a temperature not exceeding 6°C while allowing at least 24 hours holding (tumbling and resting) between injection and cooking to obtain good salt distribution. The cooking may be carried out in a mould or a casing after which the meat is wrapped in the water absorbing material either directly or after chilling. After treatment with the water absorbing material, the meat may be sliced and gas packed in a modified atmosphere.

The following Example further illustrates the present invention.

### Example 1

Fresh hams having pH 5.7 were cut and trimmed. A brine solution having the composition given in Table I was injected with a FOMACO multineedle injector in an amount of 180 g/kg ham.

## TABLE I

|  | % |
|---|---|
| Water | 83.56 |
| Curing salt | 13.26 |
| Dextrose | 3.0 |
| Ascorbate | 0.17 |
| Garlic extract | 0.01 |

The injected ham was treated under vacuum in Dorit 90 litre tumblers for 15 hours using an interval programme (10 min. on - 10 min. off).

The ham was then packed in 12 kg capacity moulds and treated in vacuum for 2 minutes to reduce air pockets before closing the moulds. A total resting time of 15 hours, partly in the moulds, was included to allow for even salt distribution.

The cooking was carried out stepwise as follows:

1. 62°C chamber temperature to 55°C internal product temperature
2. 74°C chamber temperature to 68°C internal product temperature
3. Holding at 68°C for 1.5 hours.

The moulds were cooled with a water shower for 10 minutes to ease handling and then opened to drain and weigh the products. Each ham was wrapped in absorbing paper using 500 g paper/ham, then vacuum packed and chilled at 2°C. After 3 days of storage, the hams were weighed to determine the total yield, then sliced (2 mm thickness) and packed in batches of 4 slices in modified atmosphere packages (2 mm headspace, 20% $CO_2$, 80% $N_2$). The drip was evaluated visually after one week at 8°C. The yield (corrected for an estimated 5% slicing loss) was 92% and the packages were completely free from visible drip.

### Comparative Example

Fresh hams were treated in a similar manner to that described in Example 1 except that they were not wrapped in absorbing paper, vacuum packed and chilled. The yield (corrected for an estimated 5% slicing loss) varied between 97.5 and 102% and all the packages had considerable amounts of visible drip.

### Claims

1.  A method of removing free, unbound water from cooked meat characterised in that the meat is treated with a water absorbing material after cooking.

2.  A method according to claim 1 characterised in that the cooked meat is cooked ham.

3.  A method according to claim 1 characterised in that the water absorbing material is paper sheet, a pad of cellulose fibres or other natural or synthetic absorbing materials.

4.  A method according to claim 1 characterised in that the meat is wrapped in the water absorbing material after cooking.

5.  A method according to claim 1 characterised in that the treatment with the water absorbing material is carried out, before chilling, during chilling, during chilled storage or after slicing.

6.  A method according to claim 1 characterised in that during the treatment with the water absorbing material the meat is pressed either in a mould or casing or by means of the atmosphere in a vacuum bag.

7.  A method according to claim 6 characterised in that the mould or casing is the mould or casing used for cooking.

8. A method according to claim 5 characterised in that the treatment with the water absorbing material is carried out for a period of from 1 to 4 days at a storage temperature from 0°C to 4°C.

9. A method according to claim 1 characterised in that after the treatment with the water absorbing paper, the meat is sliced and gas packed in a modified atmosphere.


## Patentansprüche

1. Verfahren zur Entfernung von freiem, ungebundenem Wasser aus gekochtem Fleisch,
**dadurch gekennzeichnet,**
daß das Fleisch nach dem Kochen mit einem Wasser absorbierenden Material behandelt wird.

2. Verfahren gemäß Anspruch 1,
**dadurch gekennzeichnet,**
daß das gekochte Fleisch gekochter Schinken ist.

3. Verfahren gemäß Anspruch 1,
**dadurch gekennzeichnet,**
daß es sich bei dem Wasser absorbierende Material um Papier, einen Ballen aus Cellulosefasern oder anderen natürlichen oder synthetischen Materialien handelt.

4. Verfahren gemäß Anspruch 1,
**dadurch gekennzeichnet,**
daß das Fleisch nach dem Kochen in das Wasser absorbierende Material eingewickelt wird.

5. Verfahren gemäß Anspruch 1,
**dadurch gekennzeichnet,**
daß die Behandlung mit dem Wasser absorbierenden Material vor dem Einfrieren, während dem Einfrieren, während der Kühllagerung oder nach dem Schneiden durchgeführt wird.

6. Verfahren gemäß Anspruch 1,
**dadurch gekennzeichnet,**
daß das Fleisch während der Behandlung mit dem Wasser absorbierenden Material entweder in eine Form oder ein Gehäuse oder durch die Atmosphäre in einem Vakuumbeutel zusammengepreßt wird.

7. Verfahren gemäß Anspruch 6,
**dadurch gekennzeichnet,**
daß die Form oder das Gehäuse die sind, wie sie beim Kochen verwendet wurden.

8. Verfahren gemäß Anspruch 5,
**dadurch gekennzeichnet,**
daß die Behandlung mit dem Wasser absorbierenden Material während einer Zeit von 1 bis 4 Tagen bei einer Lagerungstemperatur zwischen 0 °C und 4 °C durchgeführt wird.

9. Verfahren gemäß Anspruch 1,
**dadurch gekennzeichnet,**
daß das Fleisch im Anschluß an die Behandlung mit dem Wasser absorbierenden Papier geschnitten und in einer modifizierten Atmosphäre gasverpackt wird.


## Revendications

1. Procédé pour éliminer l'eau libre, non liée, de la viande cuite, caractérisé en ce que la viande est traitée avec une matière absorbant l'eau après cuisson.

2. Procédé suivant la revendication 1, caractérisé en ce que la viande cuite consiste en jambon cuit.

3. Procédé suivant la revendication 1, caractérisé en ce que la matière absorbant l'eau consiste en une feuille de papier, un tampon de fibres de cellulose ou d'autres matières absorbantes, naturelles ou synthétiques.

4. Procédé suivant la revendication 1, caractérisé en ce que la viande est enroulée dans la matière absorbant l'eau, après cuisson.

5. Procédé suivant la revendication 1, caractérisé en ce que le traitement avec la matière absorbant l'eau est effectué avant réfrigération, pendant réfrigération, au cours du stockage à l'état réfrigéré ou après découpe en tranches.

6. Procédé suivant la revendication 1, caractérisé en ce que, au cours du traitement avec la matière absorbant l'eau, la viande est comprimée dans un moule ou un bac ou au moyen de l'atmosphère dans un sachet de conditionnement sous vide.

7. Procédé suivant la revendication 6, caractérisé en ce que le moule ou le bac est le moule ou le bac utilisé pour la cuisson.

8. Procédé suivant la revendication 5, caractérisé en ce que le traitement avec la matière absorbant l'eau est effectué pendant un temps de 1 à 4 jours à une température de stockage de 0°C à 4°C.

9. Procédé suivant la revendication 1, caractérisé en ce que, après le traitement avec le papier absorbant l'eau, la viande est coupée en tranches et conditionnée en présence d'un gaz, dans une atmosphère modifiée.